# FASCICULE DE BREVET EUROPEEN

(11) **EP 2 507 168 B1**
(45) Date de publication et mention de la délivrance du brevet: **06.11.2013**
(21) Numéro de dépôt: 10787103.0
(22) Date de dépôt: 02.12.2010
(51) Int. Cl.: C01B 25/231

(54) **PROCEDE DE PRODUCTION D'ACIDE PHOSPHORIQUE**
VERFAHREN ZUR HERSTELLUNG VON PHOSPHORSÄURE
METHOD FOR PRODUCING PHOSPHORIC ACID

(30) Priorité: 02.12.2009 BE 200900740
(43) Date de publication de la demande: 10.10.2012
(73) Titulaire: Prayon Technologies, 4480 Engis (BE)
(72) Inventeur: HOXHA, Antoine, B-4121 Neuville-en-condroz (BE); FATI, Dorina, B-4121 Neuville-en-Condroz (BE)
(74) Mandataire: Coulon, Ludivine
(86) Numéro de dépôt international: PCT/EP2010/068709
(87) Numéro de publication internationale: WO 2011/067321

(56) Documents cités:
- CA-A- 915 883
- GB-A- 1 164 836
- US-A- 3 523 754
- US-A- 3 984 525
- US-A- 4 588 570
- US-A1- 2004 047 790
- Schrödter, K. et al: "Ullmann's Encyclopedia of Industrial Chemistry - Phosphoric Acid and Phosphates", Ullmann's Encyclopedia of Industrial Chemistry, 2008, pages 1-48, XP002593034, Weinheim Extrait de l'Internet: URL:http://mrw.interscience.wiley.com/emrw /9783527306732/ueic/article/a19_465/curren t/pdf [extrait le 2010-07-20] cité dans la demande

## Description

La présente invention est relative à un procédé de production d'acide phosphorique par attaque de roche phosphatée au moyen d'acide sulfurique.

Le procédé classique de ce type consiste à faire réagir la roche phosphatée avec l'acide sulfurique dans des conditions donnant lieu à une cristallisation de sulfate de calcium dihydrate ou gypse (CaSO₄.2H₂O). La bouillie de gypse obtenue dans un premier réacteur peut être ensuite soumise, dans un second réacteur, à une maturation permettant un grossissement des grains de sulfate formés, et cela pour augmenter la filtrabilité. La bouillie maturée est ensuite filtrée avec obtention d'un acide phosphorique présentant une teneur en P₂O₅ libre de l'ordre de 25 à 35 % en poids. Le gypse obtenu contient encore assez bien de P₂O₅, soit non attaqué, soit cocristallisé, c'est-à-dire fixé dans le réseau cristallin du gypse. Cela limite le rendement d'extraction du P₂O₅ contenu dans le phosphate et rend le gypse impropre à certaines applications.

On connaît également des procédés de production d'acide phosphorique par attaque à l'acide sulfurique donnant, à des températures et concentrations en P₂O₅ et/ou SO₃ plus élevées, une bouillie de sulfate de calcium sous forme d'hémihydrate (CaSO₄.1/2H₂O) ou d'anhydrite. Ces procédés donnent généralement un acide phosphorique concentré et un sulfate bien filtrable, mais le rendement d'extraction du P₂O₅ de ces procédés est inférieur au procédé classique. Dans certain cas, on procède également, après cette attaque, à une conversion du sulfate de calcium hémihydrate obtenu en sulfate de calcium dihydrate (v. Schrödter et al., Phosphoric Acid and Phosphates, Ullman's Encyclopedia of Industrial Chemistry, 2008, pages 8 et 9).

On connaît aussi des procédés comprenant une triple cristallisation de sulfate de calcium d'abord en hémihydrate, puis en dihydrate et enfin à nouveau en hémihydrate (v. US-A-4588570).

En vue d'améliorer les résultats du procédé classique, on a prévu, après séparation de l'acide phosphorique de production à partir de la bouillie de gypse, de mélanger le reste de celle-ci à de l'acide sulfurique concentré et éventuellement de chauffer le tout, pour convertir le gypse en sulfate de calcium hémihydrate. La seconde bouillie ainsi formée est filtrée à son tour et le filtrat acide est recyclé à l'étape d'attaque (voir FR 1485940). Ce procédé améliore nettement le rendement d'extraction en P₂O₅. En effet le P₂O₅ cocristallisé dans le gypse au cours de l'attaque est libéré lors de la solubilisation des cristaux de gypse, tandis que le sulfate de calcium, recristallisé en hémihydrate, est très pur et extrêmement bien filtrable. Toutefois ce procédé nécessite deux filtrations, c'est-à-dire deux filtres, d'où un encombrement énorme de l'installation à l'échelle industrielle.

Suivant une variante de ce procédé, on a prévu, après avoir appliqué les conditions du procédé classique de formation d'une bouillie de gypse, de soumettre directement celle-ci à un mélange avec de l'acide sulfurique et éventuellement à un chauffage, sans en séparer préalablement l'acide phosphorique de production. La bouillie d'hémihydrate obtenue est filtrée en donnant un gâteau d'hémihydrate très pur, mais un filtrat formé d'un mélange d'acide phosphorique et d'acide sulfurique. Pour obtenir un acide phosphorique de production de qualité, il faut alors soumettre ce mélange à une installation de désulfatation, ce qui ne résout donc pas les problèmes d'encombrement. On connaît encore d'autres procédés de production d'acide phosphorique fort semblables au précédent comprenant une conversion de dihydrate en hémihydrate et présentant ces mêmes inconvénients (GB-1164836, US-A-3984525).

On connaît enfin un procédé dans lequel on soumet à nouveau la roche phosphatée aux conditions d'attaque du procédé classique de façon à obtenir une première bouillie dans laquelle le gypse formé présente une taille de grains permettant une bonne filtration. Une partie de cette première bouillie est alors prélevée et soumise à des conditions dans lesquelles le gypse est converti en hémihydrate, en formant ainsi une seconde bouillie. Le reste de la première bouillie est alors mélangé à la seconde et le tout est filtré (voir WO 2005/118470).

La présente invention a pour but de mettre au point un procédé de production d'acide phosphorique par attaque de roche phosphatée au moyen d'acide sulfurique qui améliore la qualité de l'acide phosphorique de production et le rendement d'extraction du P₂O₅ à partir de la roche. Ce procédé doit en outre pouvoir aisément être appliqué dans une installation classique existante et donc ne pas nécessiter de transformations coûteuses et indéfendables économiquement parlant.

Pour résoudre ces problèmes, il est prévu suivant l'invention un procédé de production d'acide phosphorique, comprenant
- une attaque en milieu aqueux de roche phosphatée par de l'acide sulfurique à une première température comprise entre 70 et 90°C, avec formation d'une première bouillie de cristaux de sulfate de calcium dihydrate en suspension dans une phase aqueuse acide, la phase aqueuse acide de cette bouillie présentant une teneur en P₂O₅ libre comprise entre 38 et 50 % en poids et une teneur en SO₃ libre inférieure à 0,5 % et supérieure à 0,05 % en poids,
- une conversion de cette première bouillie par chauffage à une température supérieure à 90°C, avec solubilisation des cristaux de sulfate de calcium dihydrate et recristallisation du sulfate de calcium solubilisé donnant lieu à une seconde bouillie formée de cristaux de calcium hémihydrate en suspension dans une phase aqueuse à base d'acide phosphorique, et
- une séparation dans la seconde bouillie entre un acide phosphorique de production, présentant une teneur en SO₃ libre inférieure à 2 % et supérieure à 0,05 % en poids, et un gâteau de filtration à base de sulfate de calcium hémihydrate.

Dans la présente demande de brevet, il faut entendre que les teneurs en acide phosphorique libre et en acide sullfurique libre sont exprimées en P₂O₅ libre et en SO₃ libre.

D'une manière tout à fait inattendue, ainsi qu'il sera expliqué par la suite, le procédé suivant l'invention donne lieu pendant l'étape d'attaque dans les conditions précisées à une bouillie de cristaux de dihydrate, alors que l'homme de métier devait s'attendre à la formation d'hémihydrate. La cristallisation en dihydrate n'est pas optimale, les cristaux sont petits, ils présentent une taille de grains ayant un d₅₀ inférieur à 20 µm. Une telle bouillie présenterait un coefficient de filtration très faible et elle ne pourrait donc être exploitée industriellement dans un processus nécessitant sa filtration. Cet aspect est toutefois sans importance suivant l'invention puisque cette première bouillie n'est pas destinée à être filtrée.

Les conditions d'attaque sont telles qu'elles prévoient une réaction sensiblement stoechiométrique entre l'acide sulfurique introduit et le calcium contenu dans la roche phosphatée, principalement sous forme de carbonate et de phosphate de calcium. La phase aqueuse acide de cette première bouillie résultant de l'attaque ne contient pas ou extrêmement peu d'acide sulfurique libre et sa teneur en P₂O₅ libre est assez élevée.

Avantageusement, la température d'attaque peut être comprise entre 70 et 80°C.

D'une manière préférentielle la concentration en P₂O₅ libre résultant de l'étape d'attaque pourra être de 40 à 45% en poids.

La concentration en SO₃ libre de la phase aqueuse acide de la première bouillie peut être de 0,1 à 0,4 % en poids.

Cette première bouillie est alors directement soumise, dans sa totalité, à une étape de conversion qui consiste à la chauffer à une température supérieure à 90°C, de préférence comprise entre 90 et 105°C. Ce chauffage occasionne de manière connue une solubilisation des cristaux de gypse, une libération du P₂O₅ cocristallisé dans le gypse pendant l'étape d'attaque et une recristallisation du sulfate de calcium sous forme d'hémihydrate.

On obtient ainsi d'une manière simple et aisée une seconde bouillie dans laquelle les cristaux d'hémihydrate ont une forme sphérique et sont de taille courante, en présentant par exemple un d₅₀ de 60 µm, ce qui donne un gâteau de filtration présentant un excellent coefficient de filtration.

L'acide de production a une teneur en SO₃ libre extrêmement faible avantageusement de l'ordre de 0,05 % à moins de 1 % en poids, ce qui en fait un acide phosphorique de qualité. On peut avantageusement obtenir un acide phosphorique de production présentant une teneur en P₂O₅ libre de 35 à 45 % en poids.

Selon une forme de réalisation de l'invention, l'étape de chauffage de la première bouillie ne comprend aucune addition d'acide sulfurique. On peut toutefois envisager que le procédé comprenne, pendant l'étape de conversion de la première bouillie, une introduction dans celle-ci d'acide sulfurique. La quantité d'acide sulfurique ajoutée doit cependant être dosée de manière précise pour que, après la filtration de la seconde bouillie, l'acide phosphorique de production contienne une teneur en SO₃ libre inférieure à 2 % en poids, de préférence de l'ordre de 0,05 à 1,5 % en poids, en particulier de l'ordre de 0,05 à moins de 1 % en poids. Il est important de ne pas dépasser cette teneur afin de ne pas polluer l'acide phosphorique par de l'acide sulfurique ce qui le rendrait impropre à l'utilisation en tant qu'acide phosphorique et nécessiterait une étape de désulfatation.

Suivant une forme préférée de réalisation de l'invention, le procédé comprend l'étape d'attaque dans un premier réacteur, et un transfert de la première bouillie du premier réacteur à un second réacteur, dans lequel est effectuée l'étape de conversion avec formation de la seconde bouillie, l'étape de séparation étant effectuée sur un filtre. Ce procédé présente l'avantage de pouvoir être utilisé dans une installation existante de production d'acide phosphorique par attaque classique à l'acide sulfurique. Le premier réacteur est le réacteur d'attaque de l'installation classique, dans lequel des conditions d'attaque différentes sont appliquées. Le deuxième réacteur est le réacteur de maturation de l'installation classique. Comme un grossissement des grains de gypse résultant de l'attaque n'est pas nécessaire suivant l'invention, on peut utiliser ce réacteur de maturation comme réacteur de conversion. Enfin le filtre de l'installation classique peut être utilisé pour filtrer de l'hémihydrate au lieu de gypse. Ce filtre peut être n'importe quel dispositif de filtration connu, approprié, par exemple un filtre à bande, un dispositif à cellules filtrantes disposées en carrousel, entre autres.

Le procédé suivant l'invention est avantageusement effectué en continu. De préférence le temps de séjour dans le premier réacteur est de 2 à 4 h et le temps de séjour dans le second réacteur de 0,5 à 1,5 h. Les temps de séjour correspondent aux temps de séjour dans les réacteurs d'attaque et de maturation d'une installation classique.

D'autres modes de réalisation de l'invention sont indiqués dans les revendications annexées.

D'autres détails et particularités de l'invention ressortiront de la description donnée ci-après, à titre non limitatif, et avec référence aux dessins annexés.

La figure 1 représente sous la forme d'un schéma d'écoulement un exemple d'installation mettant en oeuvre un procédé suivant l'invention.

La figure 2 est un graphique illustrant des régions de formation de dihydrate et d'hémihydrate en fonction de la température, de la concentration en P₂O₅ et de la concentration en SO₃.

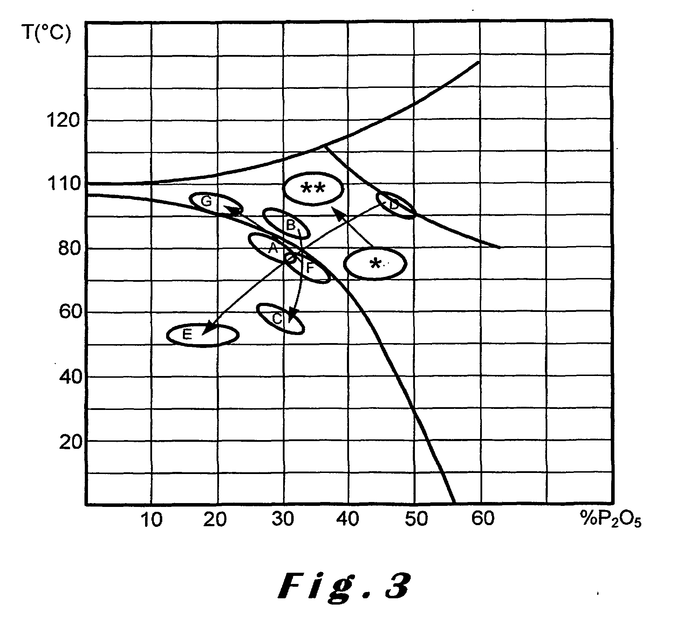

La figure 3 est un graphique qui illustre les différents processus appliqués pour la production d'acide phosphorique par attaque sulfurique.

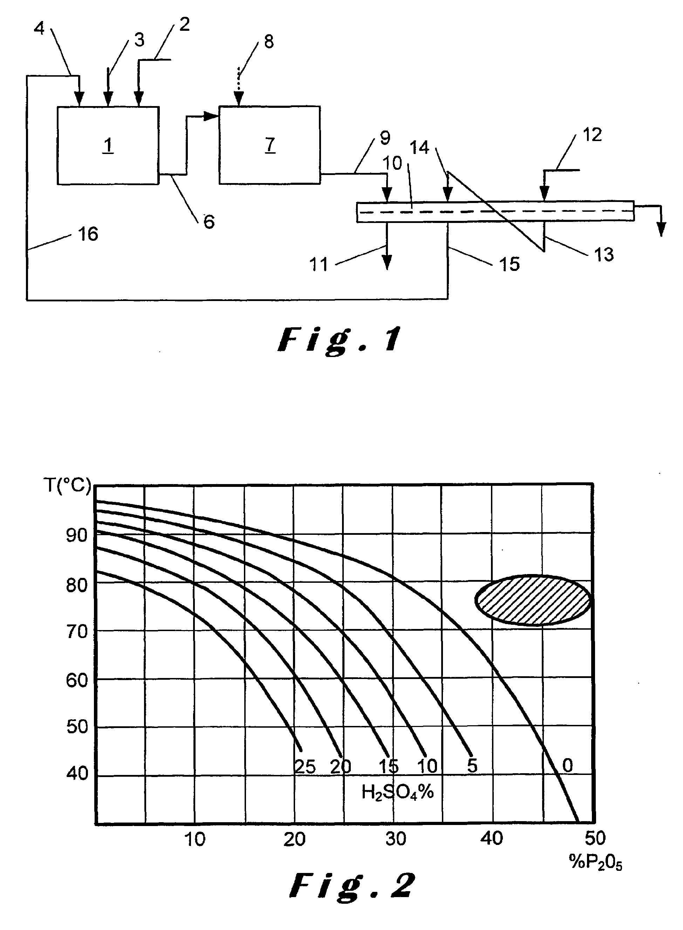

L'installation illustrée sur la figure 1 comprend un réacteur d'attaque 1 dans lequel on introduit en 2 de la roche phosphatée broyée et en 3 de l'acide sulfurique, par exemple de l'acide sulfurique concentré à 98-99 % en poids. Une solution aqueuse d'acide phosphorique issue du procédé peut avantageusement être recyclée en 4 dans le réacteur 1.

Les conditions opératoires appliquées dans ce réacteur sont les suivantes :

| | |
|---|---|
| Température | : 70-80°C |
| % P₂O₅ libre | : 38-50 % en poids |
| % SO₃ libre | : 0,05 % - < 0,5 % en poids |
| Temps de séjour | : 2-4 h. |

Contrairement à ce qui est attendu par l'homme de métier, on obtient des cristaux de dihydrate.

En effet, on peut consulter à présent la figure 2. Le graphique représenté est extrait de A.V. Slack, Phosphoric Acid, Vol. 1, Part I, éd. Marcel Dekker Inc., 1968, New York. La température est indiquée en °C en ordonnée, les concentrations en P₂O₅ et en SO₃ en abscisse. Les courbes représentent l'équilibre entre dihydrate et hémihydrate. La région du graphique située en dessous de ces courbes correspond aux conditions de formation de dihydrate, celle située au-dessus de ces courbes à celles de formation d'hémihydrate. L'ellipse en hachuré représente la zone répondant aux conditions préférentielles de l'attaque selon la présente invention. Au contraire de ce qui est prévu à l'examen de ce graphique, on obtient suivant l'invention une bouillie stable de cristaux de dihydrate, et non d'hémihydrate.

On peut tirer la même conclusion de l'examen du graphique extrait de P. Becker, Phosphates and Phosphoric Acid. 2e éd., Marcel Dekker Inc., 1989, New York - Bâle. Dans ce graphique la température est indiquée en ordonnée et la concentration en P₂O₅ en abscisse. Dans le coin inférieur gauche du graphique se trouve la région de formation du dihydrate, dans le coin supérieur droit la région de formation de l'anhydrite et entre les deux la région de formation de l'hémihydrate. La zone A correspond aux conditions du procédé classique avec formation du gypse. Les zones B et C, reliées par une flèche, et D et E, reliées par une flèche, correspondent aux conditions de deux procédés formant en premier lieu de l'hémihydrate et convertissant ensuite celui-ci en dihydrate. Les zones F et G reliées par une flèche représentent les conditions d'un procédé formant en premier lieu du dihydrate et convertissant ensuite celui-ci en hémihydrate.

L'ellipse marquée par une astérisque répond aux conditions d'attaque suivant l'invention et l'ellipse marquée par deux astérisques, reliée à la première par une flèche, répond aux conditions de la conversion suivant l'invention.

Selon les connaissances générales de l'homme de métier, on pouvait donc s'attendre à la formation d'hémihydrate dans les deux zones correspondant à ces deux ellipses, ce qui n'est pas le cas et est déjà surprenant en soi.

La totalité de la bouillie de gypse obtenue dans le réacteur 1 est alors transférée par le conduit 6, muni de moyens de transfert connus en soi, à un réacteur de conversion 7. Dans ce réacteur, les conditions opératoires suivantes sont appliquées :

| | |
|---|---|
| Température | : 90-105°C |
| % P₂O₅ | : 35-45 % en poids |
| % SO₃ | : 0,1 % - <1,0 % en poids |
| Temps de séjour | : 0,5-1,5 h. |

Pour chauffer ce réacteur, on peut appliquer des moyens courants, par exemple un chauffage direct, une injection de vapeur d'eau dans le milieu de conversion ou une combinaison des deux. Toute autre source de chaleur appropriée peut bien entendu être utilisée à cet effet. Sous l'effet de l'augmentation de chaleur, les cristaux de gypse se solubilisent, le P₂O₅ cocristallisé est libéré et le sulfate de calcium recristallise sous forme de cristaux d'hémihydrate relativement purs.

Selon une variante de procédé, il est possible, pour améliorer encore la conversion du gypse en hémihydrate, d'ajouter dans le réacteur de conversion 7 une petite quantité dosée d'acide sulfurique. Cette quantité doit toutefois être telle que la teneur en SO₃ libre dans l'acide de production soit inférieure à 2 % en poids, de préférence à 1%. L'acide de production ne peut pas être pollué par cet ajout d'acide sulfurique.

Le procédé illustré comprend un transfert de la bouillie du réacteur 7 par le conduit 9 vers un filtre 10 de type courant.

Dans une première section du filtre on obtient un filtrat en 11 qui est l'acide phosphorique de production et un gâteau de filtration.

Le procédé illustré comprend deux étapes de lavage du gâteau. Le second lavage est effectué à l'aide d'un liquide de lavage qui est de préférence de l'eau, alimentée en 12.

Le produit de ce lavage obtenu en 13 est une solution aqueuse à faible teneur en acide phosphorique qui sert comme liquide de lavage alimenté en 14 à la première étape de lavage. Le produit de ce premier lavage, obtenu en 15, est une solution aqueuse d'acide phosphorique qui peut être recyclée en 4 au réacteur d'attaque 1, par l'intermédiaire d'un conduit de recyclage 16.

Par rapport au procédé dit classique, le procédé suivant l'invention offre l'avantage d'un rendement d'extraction amélioré, étant donné la recristallisation,et de la production d'un acide à teneur élevée en P₂O₅, avec une teneur de plus de 35% en poids, au lieu des 25 à 30% obtenus par le procédé classique. Le gâteau d'hémihydrate sec est bien valorisable dans l'industrie. Ses propriétés de mise en tas sont excellentes, car en présence d'eau ou d'humidité l'hémihydrate se reconvertit en gypse. Ces améliorations sont obtenues d'une manière simple dans une installation existante, sans en augmenter l'encombrement.

Le procédé suivant l'invention va être décrit ci-dessous de manière plus détaillée à l'aide d'exemples de réalisation non limitatifs.

### Exemple 1

Un essai pilote a été réalisé avec un phosphate sédimentaire provenant du Moyen-Orient contenant 29,5 % de P₂O₅, 45,3 % de CaO, 3,2 % de F, 3,8 % de CO₂.

La distribution granulométrique de la roche broyée était proche de celle généralement utilisée dans les usines d'acide phosphorique (1,1 % passant à 500 µm, 48,8 % passant à 150 µm et 70 % passant à 75 µm).

Le phosphate est introduit dans le réacteur d'attaque d'un volume de 30 litres par une vis d'alimentation et le débit (3,2 kg/h) est régulé par un système à perte de poids. Deux pompes dosantes injectent l'acide sulfurique (2,5 kg/h) et l'acide recyclé (9,2 kg/h) issu du lavage du gâteau de filtration. La température est maintenue constante, à la valeur requise, par un système de chauffage.

L'attaque du phosphate par l'acide sulfurique a été réalisée dans les conditions suivantes :

| | |
|---|---|
| Teneur en P₂O₅ | : 38,2 % en poids |
| Excès en SO₃ | : 0,45 % en poids |
| Température | : 76°C |
| Teneur en solides | : 33 % en poids |

Le débit de sortie de la pulpe d'attaque est d'environ 9 l/h. Le temps de séjour moyen dans le réacteur d'attaque (calculé comme le rapport entre le volume du réacteur et le débit de sortie de la bouillie de dihydrate) est donc d'environ 30 I / 9 I/h = 3,3 heures. Dans ces conditions, on obtient une bouillie stable de cristaux de dihydrate de petite taille (d₅₀ inférieur à 20 µm). Il s'agit principalement de cristaux isolés, mais on observe aussi des cristaux en croix et en étoiles. Ces cristaux, qui auraient une très mauvaise filtrabilité, ne sont pas filtrés.

La bouillie de gypse obtenue lors de cette première étape est alors réchauffée à 95°C dans un second réacteur. Un faible ajout d'acide sulfurique (environ 300 gr/h) est réalisé afin d'obtenir la teneur en SO₃ libre d'un acide phosphorique normal (1,3 % en poids). Dans ces conditions la recristallisation du gypse en hémihydrate a été très aisée. Des cristaux de forme sphérique et de taille normale (d₅₀ = 60 µm) ont été obtenus.

Des essais de filtration et de lavage ont été réalisés sur la bouillie de hémihydrate afin de déterminer le coefficient de filtration. Les coefficients obtenus sont excellents (11,3 tonnes de P₂O₅ par jour /m²).

L'acide phosphorique produit contient 35,3 % en poids de P₂O₅ et 1,3 % en poids de SO₃ libre. Le gâteau de hémihydrate de filtration obtenu contient une teneur totale en P₂O₅ de 0,53 % en poids ce qui correspond à un rendement total d'extraction du P₂O₅ (attaque et filtration) de 97,9 % en poids. La teneur en eau libre du gateau hémihydrate est de 22,5% et l'eau de cristallisation est de 6,3% ce qui confirme bien qu'il s'agit de hémihydrate. Après réhydratation, le teneur en eau libre descend à environ 9,5%.

### Exemple 2

Une bouillie formée de sulfate de calcium et d'acide phosphorique titrant en poids 50 % de P₂O₅ et 0,15 % de SO₃ est obtenue par attaque d'un phosphate nord-africain (30 % de P₂O₅, 50,1 % de CaO, 3,6 % de F).

Elle est stable sous forme de dihydrate lorsque la température est de 72°C.

Ensuite elle est soumise à une augmentation de température de 1°C/5 minutes. Lorsque la température atteint 100°C on observe le début de la conversion dihydrate/hémihydrate caractérisée par une chute légère de température (processus endothermique).

Lorsque la température atteint 102°C, la conversion est terminée et le sulfate de calcium hémihydrate est désormais la forme stable. La conversion est confirmée par l'observation au microscope de cristaux. L'acide phosphorique obtenu contient 48,2 % de P₂O₅ et 0,14 % de SO₃.

### Exemple 3

Une bouillie formée de sulfate de calcium et d'acide phosphorique titrant en poids 41,6 % de P₂O₅ 0,4 % de SO₃ ; 0,24 % de Al₂O₃ ; 0,99 % de F est obtenue par attaque d'un phosphate nord-africain.

Elle est stable, au moins pendant un temps de 8 heures, sous forme de dihydrate lorsque la température est de 78°C.

Ensuite elle est soumise à un ajout d'acide sulfurique, par paliers de 0,2 %. Lorsque la teneur en SO₃ dans la phase liquide est de 0,6 % les deux phases (dihydrate et hémihydrate) sont stables et coexistent. Lorsque la teneur en SO₃ dans la phase liquide est de 0,8 % de SO₃ la conversion en hémihydrate est complète, la phase hémihydrate est désormais la forme stable. La conversion est confirmée par l'observation au microscope de cristaux, mesure de l'eau de cristallisation (6,18 %) et diffraction par rayons X (DRX).

Il doit être entendu que la présente invention n'est en aucune façon limitée aux modes de réalisation décrits ci-dessus et que bien des modifications peuvent y être apportées dans le cadre des revendications annexées.

## Revendications

1. Procédé de production d'acide phosphorique, comprenant
- une attaque en milieu aqueux de roche phosphatée par de l'acide sulfurique à une première température comprise entre 70 et 90°C, avec formation d'une première bouillie de cristaux de sulfate de calcium dihydrate en suspension dans une phase aqueuse acide, la phase aqueuse acide de cette bouillie présentant une teneur en P₂O₅ libre comprise entre 38 et 50 % en poids et une teneur en SO₃ libre inférieure à 0,5 % et supérieure à 0,05 % en poids,
- une conversion de cette première bouillie par chauffage à une température supérieure à 90°C, avec solubilisation des cristaux de sulfate de calcium dihydrate et recristallisation du sulfate de calcium solubilisé donnant lieu à une seconde bouillie formée de cristaux de calcium hémihydrate en suspension dans une phase aqueuse à base d'acide phosphorique, et
- une séparation dans la seconde bouillie entre un acide phosphorique de production, présentant une teneur en SO₃ libre inférieure à 2 % et supérieure à 0,05 % en poids, et un gâteau de filtration à base de sulfate de calcium hémihydrate.

2. Procédé suivant la revendication 1, **caractérisé en ce que** l'acide phosphorique de production obtenu présente une teneur en P₂O₅ de 35 à 45 % en poids.

3. Procédé suivant l'une ou l'autre des revendications 1 et 2, **caractérisé en ce qu'**il comprend, pendant l'étape de conversion de la première bouillie, une introduction dans celle-ci d'acide sulfurique.

4. Procédé suivant l'une ou l'autre des revendications 1 et 2, **caractérisé en ce que** l'étape de chauffage de la première bouillie ne comprend aucune addition d'acide sulfurique.

5. Procédé suivant l'une quelconque des revendications 1 à 4, **caractérisé en ce qu'**il comprend l'étape d'attaque dans un premier réacteur, et un transfert de la première bouillie du premier réacteur à un second réacteur dans lequel est effectuée l'étape de conversion, avec la formation de la seconde bouillie, l'étape de séparation étant effectuée sur un filtre.

6. Procédé suivant la revendication 5, **caractérisé en ce que** le chauffage a lieu par chauffage du second réacteur, par injection de vapeur d'eau dans la seconde bouillie, ou par ces deux processus simultanément.

7. Procédé suivant l'une ou l'autre des revendications 5 et 6, **caractérisé en ce que** le temps de séjour dans le premier réacteur est de 2 à 4 h et le temps de séjour dans le second réacteur de 0,5 à 1,5 h.

8. Procédé suivant l'une quelconque des revendications 1 à 7, **caractérisé en ce qu'**il comprend en outre au moins une étape de lavage du gâteau de filtration par un liquide de lavage avec obtention d'un produit de lavage phosphorique.

9. Procédé suivant la revendication 8, **caractérisé en ce qu'**il comprend en outre un recyclage du produit de lavage phosphorique issu d'au moins une étape de lavage susdite à l'étape d'attaque.

10. Procédé suivant l'une quelconque des revendications 1 à 9, **caractérisé en ce qu'**il est effectué en continu.

## Patentansprüche

1. Verfahren zur Herstellung von Phosphorsäure, umfassend
- Einwirkenlassen von Schwefelsäure auf ein phosphathaltiges Gestein in wässrigem Milieu bei einer ersten Temperatur im Bereich von 70 bis 90 °C, wobei sich eine erste Aufschlämmung von Calciumsulfat-Dihydratkristallen bildet, die in einer sauren wässrigen Phase in Suspension vorliegen, wobei die saure wässrige Phase dieser Aufschlämmung einen Gehalt an freiem P₂O₅ aufweist, der im Bereich von 38 bis 50 Gewichts-% liegt, sowie einen Gehalt an freiem SO₃, der geringer als 0,5 % und höher 0,05 % nach Gewicht ist,
- Umwandeln dieser ersten Aufschlämmung durch Erwärmen auf eine Temperatur von mehr als 90 °C, wobei die Calciumsulfat-Dihydratkristalle in Lösung gebracht werden und das in Lösung befindliche Calciumsulfat erneut auskristallisiert, sodass sich eine zweite Aufschlämmung bildet, die aus Calcium-Hemihydratkristallen besteht, welche in einer wässrigen Phase auf Basis von Phosphorsäure in Suspension vorliegen, und
- Durchführen, in der zweiten Aufschlämmung, einer Trennung der hergestellten Phosphorsäure, welche einen Gehalt an freiem SO₃ von weniger als 2 % und von mehr als 0,05 % nach Gewicht aufweist, von einem Filterkuchen auf Basis von Calciumsulfat-Hemihydrat.

2. Verfahren nach Anspruch 1, **dadurch gekennzeichnet, dass** die hergestellte Phosphorsäure einen Gehalt an P₂O₅ von 35 bis 45 Gewichts-% aufweist.

3. Verfahren nach einem der beiden Ansprüche 1 und 2, **dadurch gekennzeichnet, dass** der ersten Aufschlämmung, während des Schrittes der Umwandlung derselben, Schwefelsäure zugesetzt wird.

4. Verfahren nach einem der beiden Ansprüche 1 und 2, **dadurch gekennzeichnet, dass** beim Schritt des Erwärmens der ersten Aufschlämmung keinerlei Schwefelsäurezusatz erfolgt.

5. Verfahren nach einem beliebigen der Ansprüche 1 bis 4, **dadurch gekennzeichnet, dass** der Schritt des Einwirkenlassens in einem ersten Reaktor erfolgt und die erste Aufschlämmung vom ersten Reaktor in einen zweiten Reaktor überführt wird, in welchem der Umwandlungsschritt erfolgt, wobei sich die zweite Aufschlämmung bildet, wobei der Schritt der Trennung auf einem Filter erfolgt.

6. Verfahren nach Anspruch 5, **dadurch gekennzeichnet, dass** das Erwärmen erfolgt, indem der zweite Reaktor erwärmt wird oder indem Wasserdampf in die zweite Aufschlämmung eingeleitet wird oder indem diese beiden Vorgänge gleichzeitig durchgeführt werden.

7. Verfahren nach einem der beiden Ansprüche 5 und 6, **dadurch gekennzeichnet, dass** die Verweildauer in dem ersten Reaktor 2 bis 4 Std. und die Verweildauer in dem zweiten Reaktor 0,5 bis 1,5 Std. beträgt.

8. Verfahren nach einem beliebigen der Ansprüche 1 bis 7, **dadurch gekennzeichnet, dass** es darüber hinaus mindestens einen Schritt des Waschens des Filterkuchens mittels einer Waschflüssigkeit umfasst, wobei ein phosphorhaltiges Waschprodukt anfällt.

9. Verfahren nach Anspruch 8, **dadurch gekennzeichnet, dass** es darüber hinaus eine Rückführung des phosphorhaltigen Waschprodukts, welches aus mindestens einem oben genannten Waschschritt stammt, zum Schritt des Einwirkenlassens umfasst.

10. Verfahren nach einem beliebigen der Ansprüche 1 bis 9, **dadurch gekennzeichnet, dass** es kontinuierlich durchgeführt wird.

## Claims

1. A process for producing phosphoric acid, comprising:
- attack of phosphate rock in an aqueous medium with sulfuric acid at a first temperature of between 70 and 90°C, with formation of a first slurry of crystals of calcium sulfate dihydrate in suspension in an acid aqueous phase, the acid aqueous phase of this slurry having a free P₂O₅ content of between 38 and 50 % by weight and a free SO₃ content of less than 0.5 % and more than 0.05 % by weight;
- converting said first slurry by heating to a temperature higher than 90°C, with solubilisation of the crystals of calcium sulfate dihydrate, and recrystallizing the solubilised calcium sulfate to give rise to a second slurry formed of crystals of calcium hemihydrate in suspension in an aqueous phase containing phosphoric acid; and
- separating, in the second slurry, the produced phosphoric acid having a free SO₃ content lower than 2 % and higher than 0.05 % by weight from a filter cake containing calcium sulfate hemihydrate.

2. The process according to claim 1, **characterized in that** the production phosphoric acid obtained has a P₂O₅ content of 35 to 45 weight %.

3. The process according to one or other of claims 1 and 2 **characterized in that**, during the conversion step of the first slurry, it comprises the adding thereto of sulfuric acid.

4. The process according to one or other of claims 1 and 2 **characterized in that** the heating step of the first slurry does not comprise any addition of sulfuric acid.

5. The process according to any of claims 1 to 4, **characterized in that** it comprises the attack step in a first reactor and transfer of the first slurry from the first reactor to a second reactor in which the conversion step is conducted, with the formation of the second slurry, the separation step being performed on a filter.

6. The process according to claim 5, **characterized in that** heating takes place by heating the second reactor, by injection of water vapour into the second slurry, or by these two methods simultaneously.

7. The process according to one or other of claims 5 and 6 **characterized in that** the residence time in the first reactor is from 2 to 4 h and the residence time in the second reactor is from 0.5 to 1.5 h.

8. The process according to any of claims 1 to 7 **characterized in that** it further comprises at least one washing step of the filter cake with a wash liquid leading to the obtaining of a phosphoric wash product.

9. The process according to claim 8 **characterized in that** it further comprises recycling of the phosphoric wash product, derived from at least one above-mentioned washing step, towards the attack step.

10. The process according to any of claims 1 to 9 **characterized in that** it is performed continuously.
